# EUROPEAN PATENT APPLICATION

(11) **EP 1 387 527 A1**
(43) Date of publication of application: **04.02.2004**
(21) Application number: 02255321.8
(22) Date of filing: 30.07.2002
(51) Int. Cl.: H04L 12/26, H04L 12/56

(54) **Identifying network routers and paths**

(71) Applicant: Agilent Technologies Inc., Palo Alto, CA 94303-0870 (US)
(72) Inventor: Lehane, Andrew Robert, West Lothian EH30 9TG (GB); Garcia, Francisco Javier, West Lothian EH30 9TG (GB); Sventek, Joseph, West Lothian EH30 9TG (GB)
(74) Representative: Coker, David Graeme

(57) **Abstract**

A network-wide set of paths potentially taken by packets in a communications network is identified by monitoring packets traversing at least one link in the network. The contents of selected packets containing information indicative of the interconnection of the network, and of its interconnection with other networks, are used to identify the network-wide set of routers and sub-networks and their interconnections, which are traversed by communications within the network.

## Description

### Technical Field

This invention relates to methods and apparatus for identifying routers, the associated interconnecting communications links and the paths taken by packets traversing those links in a communications network, such as a packet network using the Internet Protocol (IP). The invention is particularly applicable to networks that use link-state routing protocols such as Open Shortest Path First (OSPF) or Intermediate system-Intermediate system (IS-IS), or any equivalent thereof.

### Background Art

In order to distinguish themselves from their competitors and improve levels of service to customers without compromising existing cost structures or capital budgets, Internet service providers (ISPs) are increasingly employing cost optimisation, service enhancement or service differentiation mechanisms to implement "traffic management" within their networks. These mechanisms include traffic engineering (described below), quality of service (QoS) measurements and service level agreements (SLAs). There are a variety of technologies that can help operators implement these "traffic-managed" networks. In the case of IP networks these include Multi-Protocol Label Switching (MPLS), see for example Request for Comments (RFC) 3031 of the Internet Engineering Task Force, and Differentiated Services, see for example RFCs 2474 and 2475.

A common theme among these technologies is their use of packet classification at the ingress point where a data packet first enters a discrete network (generally referred to in Internet terminology as an autonomous system). Conversely, the same packet will often be declassified at the egress point of that network so that the next network/autonomous system to receive the packet can, if it wishes, reclassify the packet in its own way. The classification ensures each packet receives the appropriate treatment when routed through a network. The treatment that a packet will receive as it passes through the network will differ depending upon the type of classification given to the packet at the ingress router.

For each classified packet, the intermediate routers coerce routing of the packet onto a different logical path through the network away from the predetermined default path that the packet would normally take if it were unclassified. At least one default path is defined for each source and destination within the network. This default path is typically the least-cost path as defined by the Interior Gateway Protocol (IGP) cost metric for each interconnection (described hereinafter in the context of OSPF with reference to Figures 4 to 7).

A logical path is therefore an alternative non-default path taken by any packet that receives different routing (packet forwarding) treatment. A logical path may for example be a separate physical path from the one that would typically be taken by the packet if it were unclassified. Similarly a logical path may be defined by different queuing treatment at the intermediate routers. In either example, a classified packet will receive a different set of treatments, depending upon the classification received, giving the packet a different set of transmission characteristics as compared to the same packet were it routed on the default path. Each logical path has a set of assigned properties that determine the transmission characteristics for the packets that traverse the path, such as how much bandwidth on the physical interconnection is reserved for that logical path, the level of service ("bronze", "silver" or "gold"), the maximum permissible jitter, or any specific routers through which the logical path must pass.

For example, a network operator applying traffic engineering may decide to transmit videoconference traffic that is sensitive to jitter via a dedicated logical path through its MPLS-enabled network. That path is different from other default paths which non-videoconference traffic will take. Despite having potentially more router hops the dedicated path (in this case a separate physical path) carries no other traffic and can therefore easily accommodate the combined voice and video load without introducing unwanted jitter. All other traffic takes the default path, e.g. the route with the smallest overall cost metric as defined by the IGP. Whichever route is taken, all traffic eventually arrives at the egress router and the packets are then declassified ready to be passed to the next network. Without this load balancing all network packets would be routed using the default path and at peak times this may cause the network to become overloaded and discard or delay packets, making the videoconference unusable and causing problems for other data traffic users.

The traffic-engineering process can be applied at many different levels, for example for different customers, for different services or for combinations of both. Equally, other traffic-management tools such as QoS and SLA mechanisms that have different business objectives could be employed. Both QoS and SLAs require packet classification at the ingress and egress points and both result in other routing policies and the use of logical paths that are different from the default (usually the least-cost) path to route traffic concurrently within the network.

Many traffic-engineering techniques involve monitoring of the network's operation, for example to audit conformance to agreed QoS or SLA criteria and to trigger timely remedial action or (less desirably) compensation if the criteria are not attained. A problem for network management systems attempting such monitoring of traffic-managed networks is to discover where packets enter and leave the network and whether the classification and subsequent treatment of the packet is correct. The network management system should detect incorrect packet classification which could cause traffic to be routed incorrectly, or failure of an internal router which could cause all traffic to follow the same path irrespective of classification, in either case resulting in packets being delayed or discarded and perhaps breaching an SLA.

The overall Internet is divided into many administrative domains. For example, an Internet service provider might constitute a single administrative domain. Each administrative domain forms part of the Internet by entering into agreements with neighbouring domains (other ISPs etc.) to form peering or transit relationships to carry each other's traffic and enable the connectivity expected by users. An administrative domain contains one or more autonomous systems (ASs). An AS is a set of routers typically under a single technical administration (e.g. an ISP), which:
- appears externally to have a single coherent interior routing plan (using one and possibly several interior gateway protocols and one or more common metrics to route packets within the AS);
- presents a consistent picture of what destinations are reachable through it; and
- uses an exterior gateway protocol to route packets to other ASs.
Hereinafter the word "network" is used in the context of the Internet to mean such an autonomous system. In the context of other kinds of communications system the word network should be understood as meaning an ensemble of operational elements which is analogous in concept and functionality to an Internet AS, whether the ensemble comprises the whole of the system or only part thereof.

The Internet consists of many ASs in many administrative domains. At each connection between each AS there are "edge" routers and each edge router has the potential to implement some form of traffic management. A large ISP may have many ingress and egress routers interacting with many other ISPs and have many different end customers. Each ingress and egress router could be classifying and routing traffic using many different policies. The enormous challenges involved in deploying, monitoring and managing traffic-management technologies is readily apparent.

Having knowledge of the overall topology of the network (e.g. the identity of active edge routers and of intermediate routers which handle a packet traversing the network) is of considerable assistance in meeting these challenges. However, existing packet network technologies do not provide this knowledge in an explicit form that is easily accessible to external tools that could be used to facilitate traffic management. A system supplementary to the network itself that could assist in the challenges described would require topological information to be delivered from a potentially very large network in near real time and ideally without impact upon existing network and router performance. Routers typically contain a complete database of router and link status in the network. This information is known as the link state database and is used to generate a routing table within each router to determine the optimum neighbouring router to which to forward a data packet towards its ultimate destination. The routing table is generated for example by means of the OSPF link-state protocol described in RFC 2328 (and referred to hereinafter as the OSPF protocol). The information contained within the router's link-state database describes the topology to an extent sufficient for that router's operational requirements; such data could in principle be extracted from the routers and be exploited to produce a complete topology description. Unfortunately, using current technologies the required data it is not accessible in a manner that satisfies the necessary requirements of scale, accuracy and timeliness whilst ensuring that network integrity is maintained.

For example, although queries using the Simple Network Management Protocol (SNMP) could in theory be used to gather the required information, this approach is not well suited to use with large networks containing multiple routers. The set of SNMP queries required when determining a complete topology for a network would place a large processing burden upon the routers and generate a substantial volume of network traffic. Furthermore, to avoid having to query each address on a network, most of which will be terminals such as personal computers or workstations, the router addresses would need to be known in advance, imposing a substantial administrative burden and compromising the benefits of autonomous discovery or verification of the network topology. Similar problems apply to extracting information from an operation support system (OSS) or other external data source; this information may not be available, may not be provided, or may be deemed too sensitive to permit retrieval via direct access. Furthermore, even if the information were available there is no guarantee, without independent verification, that the information is accurate.

It is an object of this invention to facilitate the monitoring of traffic management, by assisting with the provision of descriptions of network topology. For example, a network topology description obtained by using the invention can assist network operators to administer networks deploying traffic management techniques such as MPLS and Differentiated Services, or can be used in deploying core MPLS-enabled IP networks (see RFC 2917), Voice over IP services (also known as Internet Telephony), SLAs and QoS mechanisms. In particular the invention facilitates monitoring of the different logical paths and any associated transmission characteristics implemented over the various physical interconnections, routers and sub-networks present in the network.

### Disclosure of Invention

According to one aspect of this invention there is provided a method for identifying a network-wide set of paths potentially taken by packets in a communications network, comprising the steps of:
monitoring packets traversing at least one link in the network;
selecting packets containing information indicative of the interconnection of the network, and of its interconnection with other networks;
detecting the contents of the selected packets; and
using the detected contents to identify the network-wide set of routers and sub-networks and their interconnections, which are traversed by communications within the network.

"Network-wide" in this context means that the network description produced is not focused on any particular router or other node in the network. OSPF for example notionally produces in each router a tree description of paths through the network, with that router as the root of the tree, as a transient step towards generating a desired routing table. Paths between routers that are not needed to forward packets from this "root" router are not included in the tree. In contrast, the present invention generates a description of the network topology in which all routers are equally significant, and in a typical implementation provides a comprehensive view of all paths, not just the default path, between all routers.

According to another aspect of this invention there is provided apparatus for identifying a network-wide set of paths potentially taken by packets in a communications network, comprising:
a monitor for monitoring packets traversing at least one link in the network;
a selector for selecting packets containing information indicative of the interconnection of the network, and of its interconnection with other networks;
a detector for detecting the contents of the selected packets; and
an identifier for using the detected contents to identify the network-wide set of routers and sub-networks and their interconnections, which are traversed by communications within the network.

### Brief Description of Drawings

A method and apparatus in accordance with this invention, for identifying functionality of routers interconnected by communications links in a communications network, will now be described, by way of example, with reference to the accompanying drawings, in which:
- Figure 1: shows a notional fragment of the Internet;
- Figure 2: shows an illustrative network topology description;
- Figures 3 to 7: show the format of link state advertisements as defined in the OSPF protocol;
- Figures 8 to 13: show a procedure for deriving a network topology description; and
- Figure 14: shows the notional fragment of Figure 1 after failure to two routers within it.

### Best Mode for Carrying Out the Invention, & Industrial Applicability

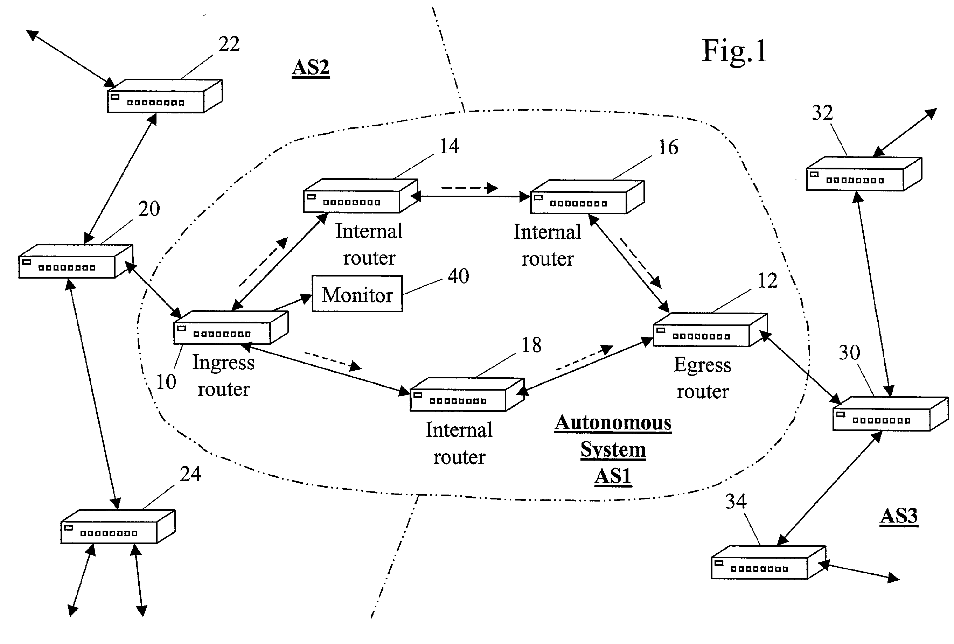

Referring to Figure 1, a notional fragment of the Internet is shown comprising an autonomous system AS1 and portions of two other autonomous systems AS2 and AS3 connected to it. The system AS1 contains two edge routers 10 and 12 which provide external connections, to the systems AS2 and AS3 respectively, and three internal routers 14, 16 and 18 which are connected solely to other routers within their own AS. The systems AS2 and AS3 likewise include edge routers 20 and 30 respectively, providing connection to the system AS1, as well as internal routers 22, 24, 30 and 34.

Each AS requires forwarding information, both local to the AS and global between ASs, so that data packets can be routed through the nodes or routers to the correct destinations. Between ASs the routers (and routes) are configured either statically or dynamically using a class of protocols called Exterior Gateway Protocols, e.g. the Border Gateway Protocol (BGP) described in RFC 1771. Within an AS the routers (and routes) are configured either statically or dynamically using a class of protocols called Interior Gateway Protocols (IGPs), such as OSPF, IS-IS or Routing Information Protocol (RIP). For convenience the following description will assume the use of OSPF, but the invention can be used in association with other protocols embodying analogous concepts and functionality to OSPF, including IS-IS.

In a link-state routing protocol such as OSPF each router is responsible for distributing and maintaining a database describing the topology of an area or zone forming the whole or part of the AS containing that router. This database is known as the link-state database. On start up, the router is only aware of its own local state, its connected interfaces and networks in accordance with information that is pre-configured by the router's administrator. The process of learning and distributing further network state information, such as connectivity, is achieved by exchanging special data packets defined by the OSPF protocol with other routers within the AS.

Initially "adjacencies" are formed with neighbouring routers using, for example, packet multicast techniques. An adjacency is a relationship formed with each of a router's active neighbours for the purpose of exchanging routing information. Once an adjacency has been formed the adjacent routers exchange information about their state using OSPF link-state description packets formatted in accordance with the protocol. This process continues until both routers share a common view of the topology of their zone of the AS, thereby building a link-state database in each router.

On completion of the adjacency forming process throughout the AS, each router in the AS executes the same algorithm in conjunction with its own copy of the link-state database, to construct a unique routing table comprising a tree of least-cost paths, as defined by the IGP metric, from itself as root to each destination. The resultant least cost paths become the default routes taken by all unclassified packets traversing the network.

As noted above, sets of networks within the AS can be grouped together into routing areas or zones. The topology of a zone is not shared with the rest of the AS containing that zone, to provide a significant reduction in routing traffic. Between zones summary packets are exchanged to ensure inter-zone connectivity.

After the initial generation of its link-state database and routing table, each router repeats the information exchange and route calculation process if a change in its network zone occurs. A change might involve the addition or removal of a link or router, or a change in a link's costs. To avoid the possibility of the link-state database becoming stale the packets are, in the absence of new updates, re-broadcast periodically, normally every hour.

The invention implements passive discovery of the network topology within an AS using a link-state IGP such as OSPF or IS-IS, and creation of an annotated representation of that topology to facilitate the subsequent discovery of a network-wide set of paths through that network. The annotated representation describes the AS by means of a directed graph, in which vertices represent routers or networks and edges represent links connected to the routers. The annotations indicate discovered data about the router or network represented by each vertex. In the case of routers the annotations indicate associated IP address, a set of interfaces denoted by IP address, and type or function (intra-zone, inter-zone or inter-autonomous system). For networks the associated network addresses and netmask, denoted by IP address, and network type (stub, transit or external) are shown. Transit networks are those capable of carrying data traffic that is neither locally originated nor locally destined. Stub networks are analogous to cul-de-sacs and external networks are destinations to other networks outside the AS.

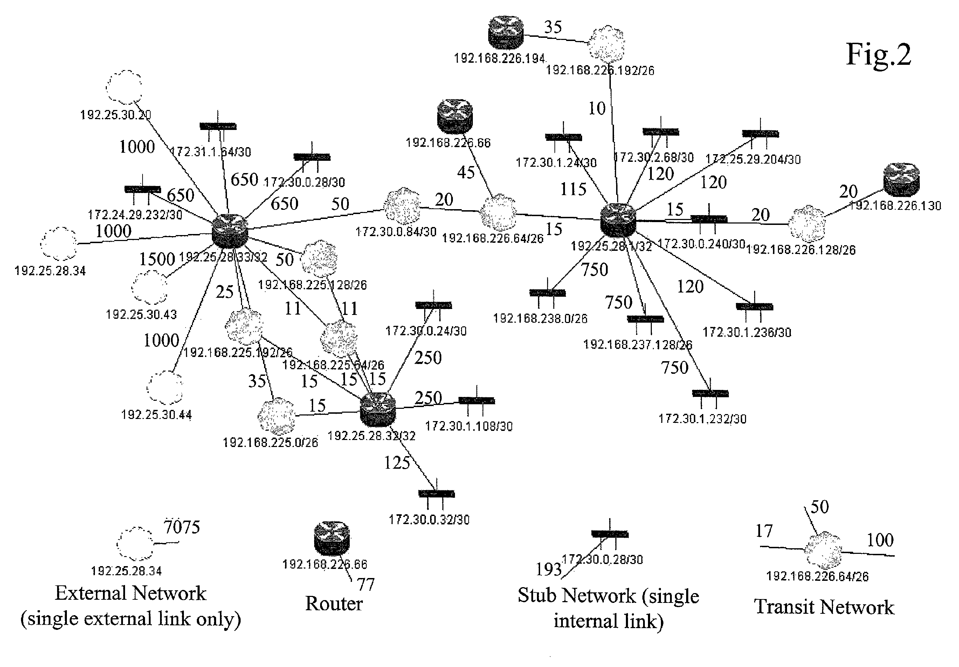

A visual representation of an example of a graph produced in accordance with the invention is shown in Figure 2. The edges of the graph connect the individual vertices. An edge connects two routers when they are attached via a physical point-to-point link whilst an edge connecting a router to a network indicates that the router has an interface on the network. Each edge is annotated with the cost of using that interface for packet forwarding, as defined by the IGP. In OSPF this is known as the link metric.

The topology discovery process is passive in the sense that the required information is obtained without interacting actively with the routers or other network elements and without generating additional network traffic. To this end and as shown in Figure 1 at least one probe or monitor 40 is connected to the AS at a point where the OSPF packets are present. The probe could for example be a low-cost computer, such as a "personal computer", running a dedicated software program and connected to the AS via an Ethernet card. The "logical" point of connection to the network is chosen to ensure that OSPF packets broadcast by the routers traverse that point. Physically, this connection point may be, for example, a port on a router, or a tap into a link between two routers or from a sub-network via a hub or switch. In OSPF terms a connection is required at any point in the network traversed by OSPF packets. Within the probe 40 itself the software program opens a connection in "promiscuous mode" onto the network link or segment of the chosen network zone. Promiscuous mode allows the probe to receive the required OSPF packets irrespective of their LAN destination address. The received packets are allowed to continue their journey through the network without interference (rather than being received and removed from the network).

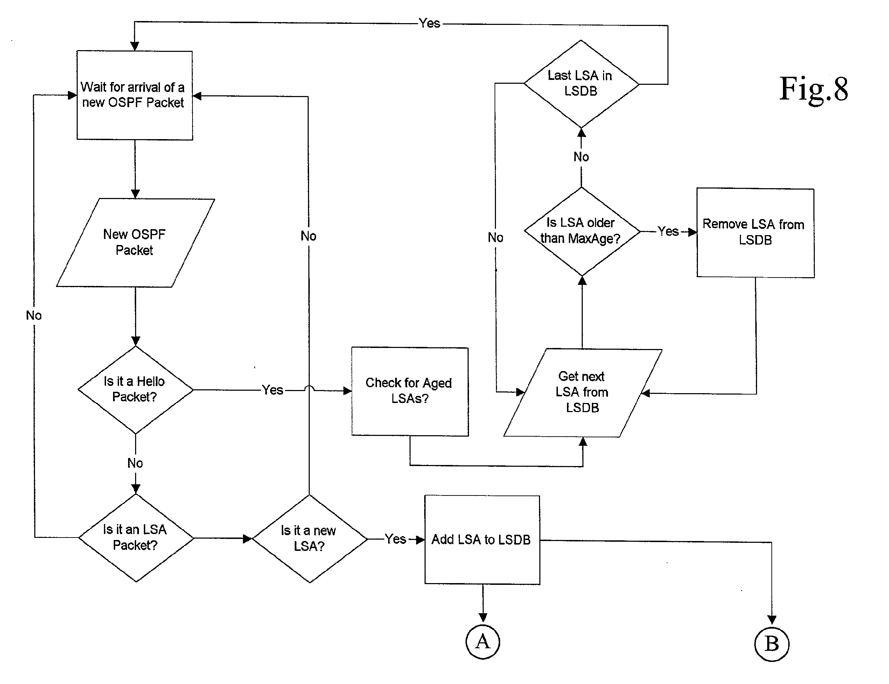

The probe 40 does not implement a state machine as described in RFC 2328 to establish an adjacency with any router, as that would require the probe to become an active participant in the OSPF routing protocol, thereby creating spurious link-state database entries in that zone's other routers. Instead the probe 40 remains passive and relies on the flooding process of OSPF packets by the routers in the zone or AS. The probe 40 waits for OSPF packets to arrive on the monitored interface, rather than requesting them using the normal OSPF mechanisms. A topology derivation procedure (described below and illustrated in Figures 8 to 13) is executed upon the receipt of every OSPF packet, to build up the desired topology description incrementally. The start-up procedure requires the default link-state refresh interval, normally one hour, to have elapsed before a complete topology description is determined. Thereafter by continuing to track the OSPF packets the probe can keep the topology description in step with the state of the network.

The number of probes required for an AS depends upon the size of the AS and how it is organised. A single probe can generate a complete annotated topology for the zone to which it is connected. An OSPF network always has at least one zone, which is known as the backbone. Connection to this backbone is preferred. Experience indicates that many networks are hierarchical in design and a single probe connected to the backbone will provide a very useful annotated topology. To discover a complete annotated topology for a multizone AS, a connection to each active zone is required. However, even a single connection will provide, in addition to the complete annotated topology of the chosen zone, summary information for the networks in other zones in the AS, plus any connections to external networks via the AS's edge routers.

Each probe 40 monitors the packets traversing the link to which it is connected, and makes copies of selected types of packets described below. It then extracts data from these copies and processes the data to yield information for the annotated topology.

Five types of packet are defined in the OSPF protocol, as shown in the following table. For the purposes of the present invention two of these OSPF packet types are used, Hello packets and Link State Update packets, types 1 and 4 respectively.

| Type | Description |
|---|---|
| 1 | Hello |
| 2 | Database Description |
| 3 | Link State Request |
| 4 | Link State Update |
| 5 | Link State Acknowledgement |

Hello packets are present on OSPF networks, for example on broadcast media such as Ethernets, and are transmitted most frequently, appearing at regular intervals on a given network segment. Hello packets can therefore be used to supply the probe 40 with an accurate indication of network time. An accurate time stamp is applied to Hello packets on their arrival at the probe. For example, a probe based upon a personal computer could obtain an accurate indication of time either from its internal clock or from a Global Positioning System (GPS) receiver in conjunction with the Network Time Protocol (NTP). Experience has shown that most network operators provide an accurate time service that can be used for this purpose. By measuring the inter-interval time of the Hello packets and storing the result an accurate internal representation of the passage of time can be established. This form of timer mechanism is a convenient way of providing a timebase for ensuring obsolete information is purged from the probe 40. However, any other form of timer mechanism that can provide an accurate indication of passage of time will suffice.

The Link State Update packets (OSPF type 4) contain one or more Link State Advertisements (LSAs), which describe the state of either a router (including the state of the router's interfaces and adjacencies) or a network. The collection of LSAs for a zone comprises the link-state database. Several types of LSA exist, as shown below, and each LSA type describes a different element within the AS or network zone.

| LS Type | Description |
|---|---|
| 1 | Router-LSAs |
| 2 | Network-LSAs |
| 3 | Summary-LSAs (IP network) |
| 4 | Summary-LSAs (ASBR) |
| 5 | AS-external-LSAs |

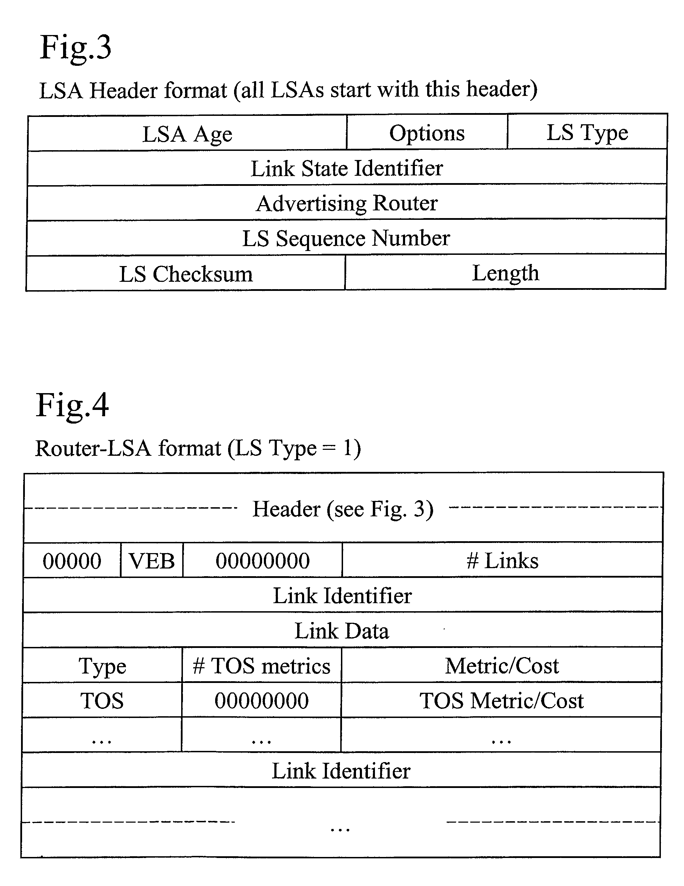

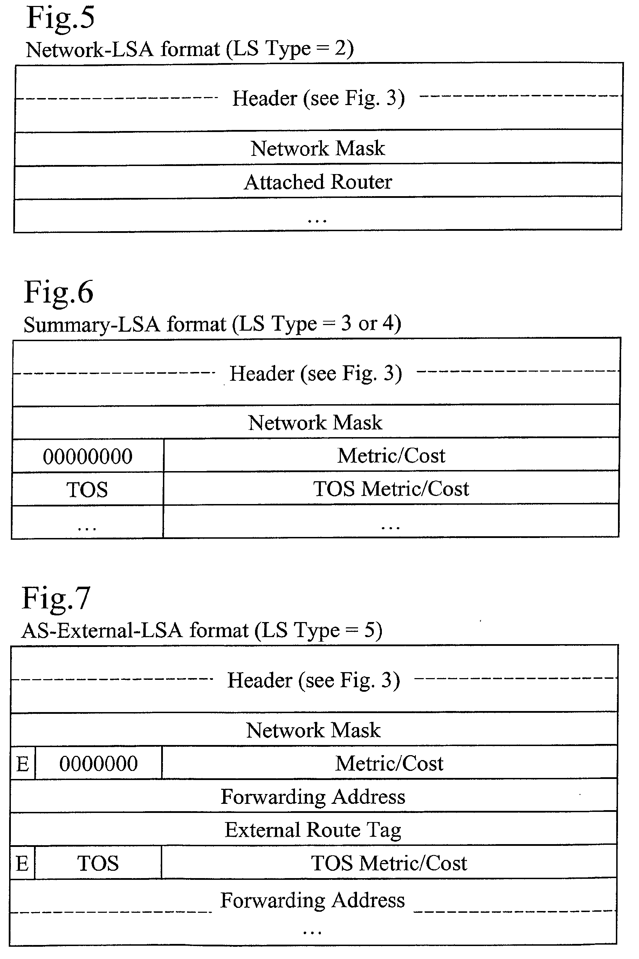

LSAs are broadcast whenever a change in the network configuration occurs, and at regular intervals to ensure that stale information is not present in the network. Each LSA has a header portion (shown in Figure 3) that contains both a key (comprising a combination of fields in the header) and age information that give a unique identity to the LSA within the AS. The process of determining if an LSA should be accepted into the link-state database is described in RFC 2328, sections 13.1 and 13.2, and is used by the probe 40 to determine if an LSA it receives is newer than an existing LSA that it already has, and whether that LSA should be accepted into its own link-state database.

Upon receipt of a Hello message as described above, the probe's internal clock is updated and the new time value is used to increment the age field of every LSA in the link-state database. If an LSA's age value thus becomes greater than the OSPF standard architectural constant MaxAge, conventionally set to one hour, the LSA is removed from the link state database (as shown in Figure 8). This process provides a safeguard ensuring that stale LSAs are removed from the probe's link-state database, so that if an updated LSA is missed by the probe or lost due to a temporary link failure, the topology description provided by the probe 40 will not be unduly corrupted.

When the probe has first assembled its link-state database, and after subsequent changes in the probe's link-state database are detected to have occurred (e.g. following receipt of a new or updated LSA), the probe's annotated description of the current network topology must be created or refreshed. The procedure for accomplishing this will now be described, with reference to Figures 8 to 13. The precise sequence of most of the steps involved is not critical, although step 6 must be performed last. Equally, the topology could be entirely re-calculated for every link-state database change, or just incrementally in respect of the most recent LSA changes processed. Both approaches are equally valid and the method that proves simpler to implement or more appropriate in a specific implementation can be chosen. In the example described below identifying the vertices of the topology first is convenient and conforms to normal graph construction techniques.

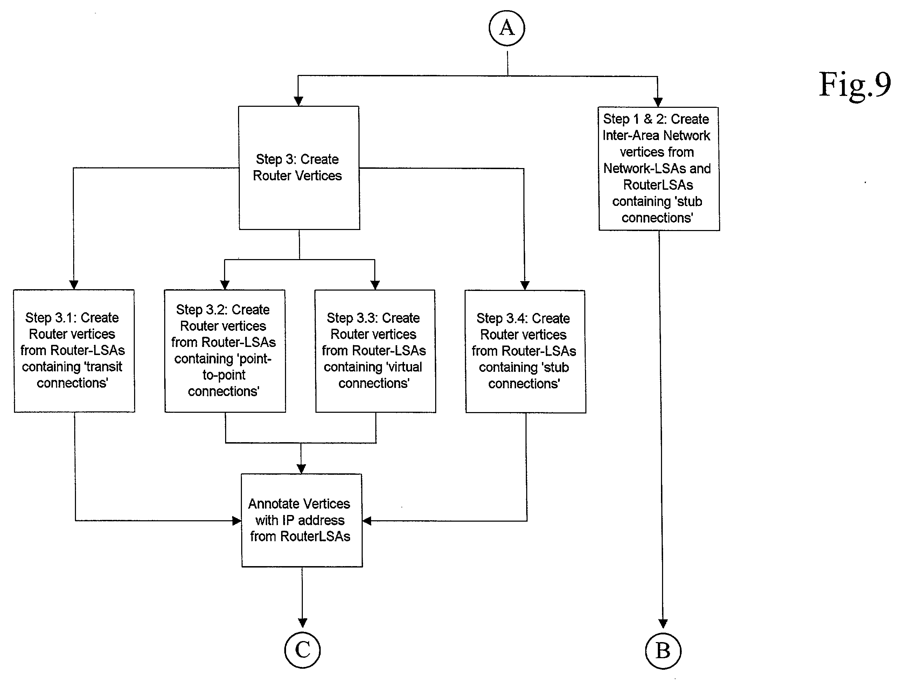

Step 1 (Figure 9): Identify the active sub-networks within the zone and the active routers in those sub-networks; this is accomplished using the LSAs that contain information about the network elements within the current zone, specifically Type 2 Network-LSAs and a subset of Type 1 Router-LSAs. Network-LSAs specify the routers that are attached to a sub-network that supports more than one router. The Network Mask field in a Network-LSA (see Figure 5) describes the size, or range, of the address space of the sub-network, and the IP address in the Link State Identifier field of the LSA's header (Figure 3) identifies the first IP address in the sub-network. Lists of active routers on that sub-network are also provided, the routers being denoted by IP address in the Attached Router field (Figure 5). Each LSA contains one entry for each and every active router on the sub-network.

Router-LSAs can be sub-divided depending upon the type of link being described, and each Router-LSA may describe several links of different types. The types of connections are identified as follows:

| Type | Description |
|---|---|
| 1 | Point-to-point connection to another router |
| 2 | Connection to a transit network |
| 3 | Connection to a stub network |
| 4 | Virtual link |

Only those Router-LSAs containing information on type 3 links to a stub network are considered in this step. For each Router-LSA describing connections to stub networks, each Link Identifier field (Figure 4) and the following Link Data field give the IP address and network mask for a connection to a stub network on the router identified by the Advertising Router field of the LSA's header. If the penultimate router on a sub-network fails so that the sub-network no longer has two or more routers the corresponding Network-LSA may not be actively withdrawn from the link-state database. In this situation although the Network-LSA is still present, it is superseded by a new type 3 Router-LSA containing an entry describing a connection to a stub network. Therefore, in order to ensure only active routers on active sub-networks are considered in this step, the information contained in these two types of LSAs are combined so that a router defined by an entry in a type 3 Router-LSA takes precedence over information about the same router defined in a Network LSA.

Step 2 (Figure 9): Specify the topology's internal network vertices. A vertex is created for each active network in the list of active sub-networks derived in step 1. The vertex is annotated with the IP address and the network mask thus specifying the identity and address range of the sub-network represented by the vertex. These vertices are also annotated with the type 'internal network'.

Step 3 (Figure 9): Specify the topology's router vertices and their associated interfaces:
Step 3.1: The type 2 Router-LSAs containing entries describing the connections to transit networks are analysed. These LSAs describe routers that have connections to sub-networks that have more than one entry/exit point. For each LSA the IP address of the router, identified by the Advertising Router field in the LSA's header, is added to the list of vertices. A list of active router interfaces identified by the IP address in the Link Data field is associated with the vertex entry. In this context an interface on a router is a synonym for the port to which a network connection or link is made.

Step 3.2: The type 1 Router-LSAs containing entries describing links that are point-to-point connections are analysed. As before the router IP address is added to the list of vertices and the IP addresses of the router's interfaces identified by the Link Data field are also added.

Step 3.3: A similar process is employed for the type 4 Router-LSAs containing entries describing virtual links (virtual links are described in RFC 2328, sections 3.1 and 15).

Step 3.4: Next the type 3 Router-LSAs, containing information about connections to stub networks, are analysed. The process is the same as that for type 2 Router-LSAs containing entries describing the connections to transit networks. However, in this case the router address itself is added as the associated router interface. The Link Data field for this type of Router-LSA entry does not describe the router's interface, but describes the network mask of the connected stub network. The IP address interface for the router's interface cannot therefore be determined. For the purposes of specifying the connections, as described later, the start point for this type of link is considered to be the router itself.

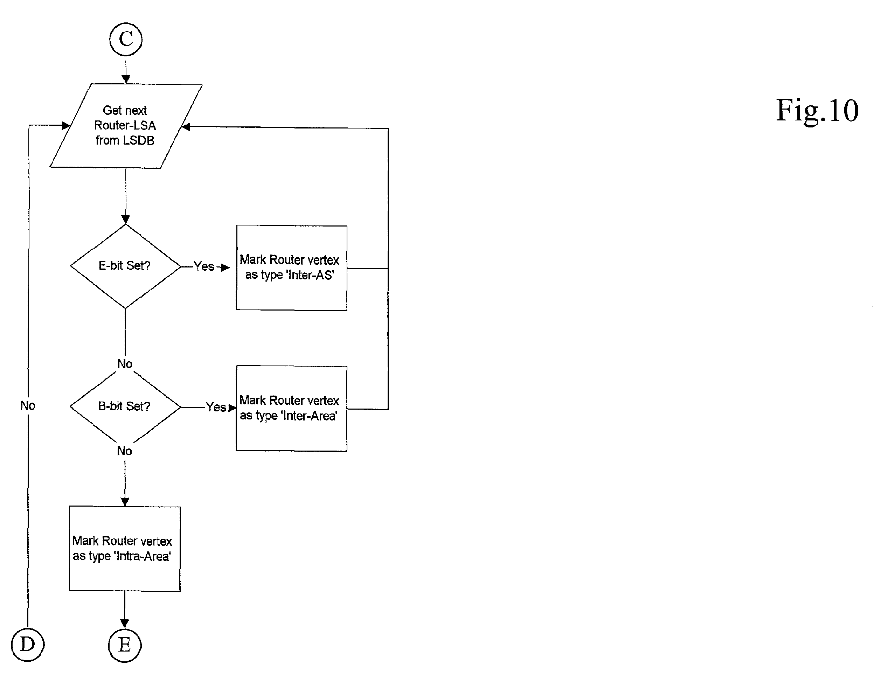

Step 3.5 (Figure 10): The specified router vertices are annotated with their associated types. The router types are marked according to the E and B flags in the VEB field of the Router-LSA (Figure 4). If the B flag is set then the router is marked as inter-area; if the E flag is set the router is marked as inter-AS or inter-network; otherwise the vertex is marked as intra-area.

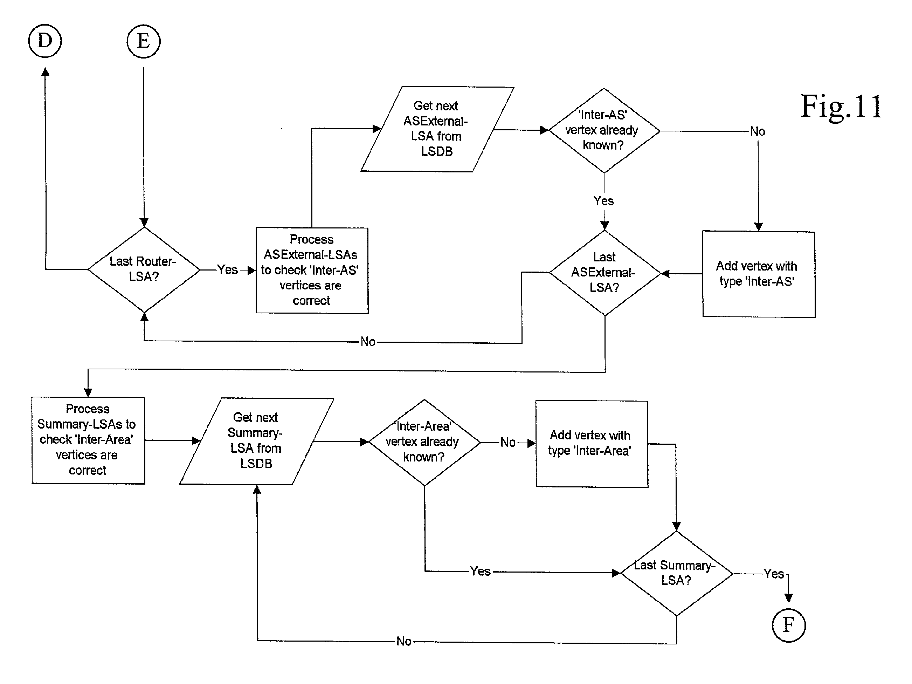

Step 3.6 (Figure 11): For each ASExternal-LSA a router vertex is added, if it does not already exist, as identified by the Advertising Router field of the LSA header, with an associated interface as identified by the IP address in the 'Forwarding Address' field (Figure 7). The vertex is annotated as an 'inter-AS router'. Similarly, for each Summary-LSA a check is made that a vertex exists for the router identified by the IP address in the Advertising Router field, and that it is annotated as being an 'intra-area router'. This step has two purposes: to check the integrity of the data and to speed the discovery process on probe start-up, during the period where a complete topology has not yet been obtained.

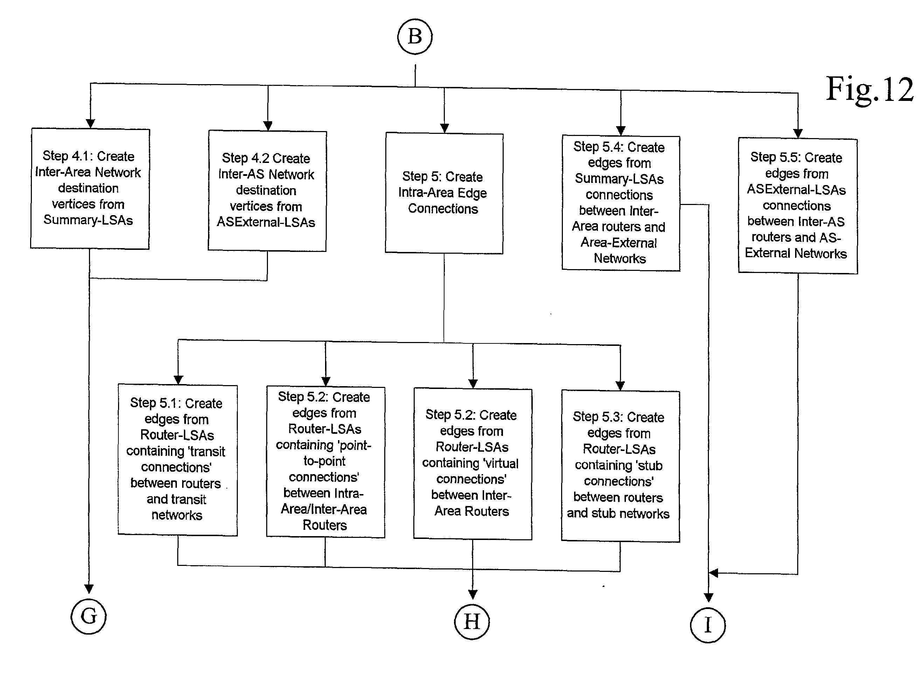

Step 4.1 (Figure 12): Specify the topology's inter-area network vertices. For this the type 3 and type 4 Summary-LSAs are considered. These LSAs describe connections to inter-area destinations comprising either networks (for type 3 Summary-LSAs) or inter-area routers (for type 4 Summary-LSAs). For each Summary-LSA, of either type, a network vertex identified by the IP address Advertising Router field and the Network Mask field (Figure 6) is added to the list of vertices. These vertices are annotated with the type 'summary network'.

Step 4.2 (Figure 12): Specify the topology's inter-AS network vertices. The type 5 ASExternal-LSAs are used to specify a set of external vertices that represent routes to networks external to the network containing the probe 40. These are routes whose existence has been made known via either pre-configured static route descriptions or via an Exterior Gateway Protocol such as BGP-4. For each of these external routes the OSPF routers will issue an ASExternal-LSA. For each LSA a vertex is added to the vertex list for the network identified by the IP address in the Link State Identifier field of the LSA's header and the Network Mask (Figure 7). The vertex is annotated with the type 'external network'.

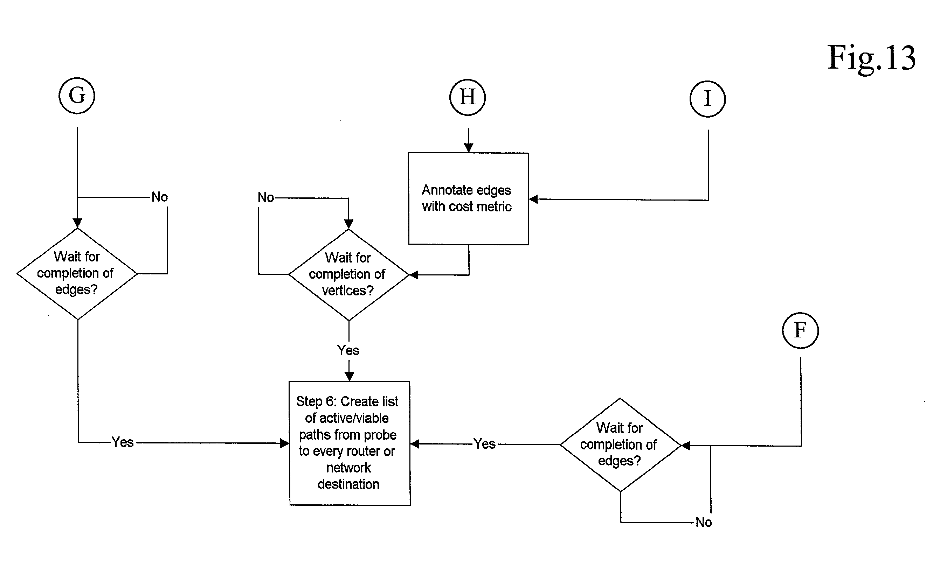

Step 5 (Figures 12 and 13): Specify the edges in the network:
Step 5.1: Specify the transit edges. Type 2 Router-LSAs containing entries describing connections to transit networks are used to specify edges in the graph that interconnect vertices representing routers to any vertices representing networks that offer a through or transit service. (A transit network is one that has two or more separate entry/exit points.) For each Router-LSA containing an entry that describes a transit connection to a network, an edge is specified in the evolving topology description from the router interface defined in the Link Identifier field (Figure 4) to the sub-network defined by the Link Data field. (According to RFC 2328 "when connecting to an object that also originates an LSA (i.e., another router or a transit network) the Link Identifier is equal to the neighbouring LSA's Link State Identifier".) Therefore the sub-network with the corresponding Network-LSA 'Link State Identifier' is used to determine the endpoint for the edge being specified. The edge is annotated with the cost of traversing the link as defined in the Metric/Cost field. It is important to note that there could be more than two edges connected to the sub-network vertex.

Step 5.2: Specify the stub edges. Router-LSAs containing entries that describe connections to stub networks are used to specify edges between the relevant router vertices and network vertices with only one entry and exit point. For each type 3 Router-LSA containing an entry that describes a connection to a stub network, an edge is added starting at the router's interface; in this instance the interface has the same address as the router itself (in effect addressing the router directly) and ending at a sub-network. The edge start is denoted by the Adverting Router field and the destination is the sub-network as defined by the Link Identifier and Link Data fields. The sub-network address is denoted by the IP address in the Link Identifier field and the network mask by the Link Data. The edge is annotated with the cost of traversing the link defined in the Metric/Cost field.

Step 5.3: Specify the point-to-point edges. Router-LSAs describing point-to-point and virtual links are used to specify edges that directly interconnect router vertices. Virtual links are described in RFC 2328 sections 3.1 and 15 and for the purposes of generating a topology they can be handled in the same way as point-to-point links. For each Router-LSA containing entries that describe either point-to-point connections to another router, type 1, or virtual links, type 4, an edge is added to the evolving topology. The edge starts at the router interface denoted by the IP address in the Link Data field and the destination router denoted by the IP address in the Link Identifier field. The edge is annotated with the cost of traversing the link defined in the Metric/Cost field.

Step 5.4: Specify the inter-area edges. Summary-LSAs are used to specify edges connecting router vertices to vertices describing any inter-area destinations. There are two types, type 3 which describe destinations that are IP networks and type 4 which describe destinations that are other inter-area routers. For each type 3 Summary-LSA an edge is added from the router's interface (in this instance having the same address as the router itself, in effect addressing the router directly) to the inter-area sub-network as defined by the Link State Identifier field and the Network Mask field. For type 4 Summary-LSAs the Network Mask field is not meaningful and must be zero, and the Link State Identifier is the IP address of the inter-AS router. In both cases the edge is annotated with the cost of traversing the link as defined in the Metric/Cost field (Figure 6).

Step 5.5: Specify the inter-AS edges. ASExternal-LSAs are used to specify edges connecting router vertices to vertices describing any external destinations outside the AS. For each ASExternal-LSA an edge is added from the router interface denoted by the Forwarding Address field (Figure 7) to the external network defined by the Link State Identifier field in the LSA's header and the Network Mask field (Figure 7). The edge is annotated with the cost of traversing the link defined by the E bit field and the Metric/Cost field. If the E-bit is unset then the metric, or cost, is defined in the same units as the other internal link metrics of the other edges. If the E-bit is set then the cost of the link is considered larger than any other internal link state path.

Step 6 (Figure 13): Maintain a graph of viable paths. The probe 40 must eliminate any out-of-date information, thus ensuring that only viable network paths are reported to a traffic-management or other application using the topology information. For example, there is a possibility that the probe's link state database may contain LSAs that arrived prior to a network outage or failure that caused a partition in the network. Fresh LSA updates from any router that resides on the network on the far side of the partition failure point will not have been able to reach the probe 40 where they would be used to remove the stale information. To maintain an accurate topology description the probe 40 must eliminate the vertices and edges representing affected routers, networks and links.

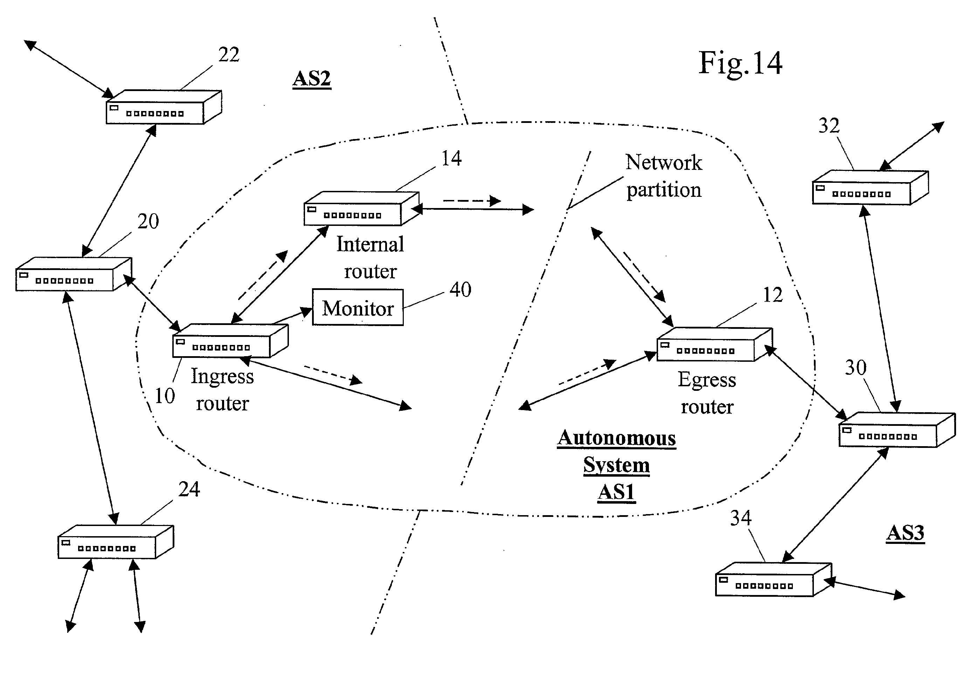

For example, in the scenario of Figure 1 the routers 16 and 18 might crash owing to a power failure. Figure 14 shows the resultant network configuration. The probe 40 will continue to receive updates from the routers 10 and 14 on its side of the failure or 'network partition'. However the router 12 lying beyond the partition cannot communicate the change to either of the routers 10 and 14. Consequently the link-state databases in the routers 10 and 14 and the probe 40 will continue to contain LSAs sent from router 12. However the information in these LSAs can no longer be considered reliable as it is from outside the probe's current known routing zone. The purpose of the probe 40 is to create a description of all possible and viable network paths, so this description should not include portions of the network beyond the point where the failed routers 16 and 18 are situated.

The reach-ability of each vertex in the graph is assessed by systematically inspecting all the vertices using a recursive procedure starting at the vertex representing the point where the probe 40 is connected to the network. There are a number of well-known procedures for determining reach-ability in graphs based upon, for example, 'breadth first search' and 'depth first search' algorithms. Only the connected edges to each vertex are considered in these algorithms so the disconnected portion of the graph, in this example routers 16 and 18, will be eliminated and the result is a 'connected graph' eliminating paths from router 12 to router 30 and beyond from the results.

It is important to note that the start vertex for the recursive algorithm could either be a router or a network depending upon which element is logically closest to the probe 40. For example, if the probe is connected directly via a tap on a point-to-point connection then the start point is the logically nearest router. Or, if the probe is connected on a transit sub-network then the sub-network should be used. A transit sub-network provides multiple reachable connections to the overall network via each of its connected routers, and these multiple connections must be considered during any reach-ability calculations. The resultant graph can be exported to an external application (e.g. for traffic management) and includes only the active interconnected vertices currently known to the probe 40.

The graph can be exported by the probe 40 to one or more external applications via an appropriate form of inter-process communication. For example, the known Remote Procedure Call mechanism (RPC) or the mechanisms described in standards for Common Object Request Broker Architecture (CORBA) or Java Remote Method Invocations (RMI) maybe used. The software for the probe 40 could also be embedded directly into application software to create a simple, small, lightweight, portable system that could be transported around the network by the operator as required.

The annotated graph data could be made available so that an application is made aware of each change as it occurs. This is sometimes referred to as a 'publish and subscribe' mechanism whereby the application subscribes to the changes as they are published. Alternatively, and more simply, a new topology could be delivered to an application on demand.

The exported topology information could take several forms but will include some type of listing of the active vertices and active edges. The listing of active vertices typically includes: the vertex identity denoted by the IP address and network mask or prefix length; the type of network element represented by the vertex, for example, network, inter-AS, inter-zone and intra-zone, and the intra-zone and the zone to which they belong. Also included could be the list of interfaces, denoted by IP address. The list of edges typically includes the vertices to which they are connected, denoted by IP address and network prefix and the cost or metric of using the link represented by the edge. Also included in the list of edges could be the interface used on the router, also denoted by IP address.

If an application requests changes as they occur, using a 'publish and subscribe mechanism, then edges and vertices that become inactive or a network change can be removed from the topology description by specifying the vertices in terms of IP address and network prefix. Similarly edges to be removed can be identified in terms of the two connecting vertices. When informing the application that an edge or vertex is no longer active the annotation information, such as edge metric or vertex type, can also be supplied but is not strictly necessary.

An application makes use of the annotated graph data to determine the set of current active logical paths by, for example, extracting a list of those vertices providing any inter-AS connectivity. Vertices of this type comprise the ingress and egress points of the network and are the most likely places where traffic classification would be applied as described above. The application can directly query the routers represented by those vertices to determine if in fact traffic classification is present; one common mechanism that could be used for such a query is SNMP (RFC 1157). SNMP and the associated Management Information Bases (MIBs) for the chosen traffic management systems are available on the majority of routers and provide a widely accepted mechanism for access to this type of network management data. The internal router vertices could also be searched if there is a likelihood of any internal traffic classification being present on the network. This is less likely but in some situations may occur.

If traffic classification is being used, for example, to route the traffic from a given provider along a path other than the default least-cost path, via an MPLS Label Switched Path (LSP), the external application can request that the router return information about the actual non-shortest path currently in use. SNMP again can be used to retrieve this path information including any transmission characteristics, for example the reserved bandwidth, that have been assigned to the logical path.

The discovered topology data can be used to determine the network-wide set of paths, including the set of default paths for the topology. It is important to note that multiple logical paths from different source routers may potentially traverse a single interconnection. As a consequence the network-wide set of paths must be considered when determining alternative logical paths. Failure to consider the network-wide set of paths may lead to over-specification and congestion on a router, sub-network or interconnection that services multiple logical paths from different source/ingress routers. The network-wide set of paths is required to ensure the validity of these calculations. To determine this set of paths use is made of recursive procedures for performing traversal of a graph based upon 'breadth-first search' or 'depth first search' and Dijkstra's algorithm (described in RFC 2328); these provide the set of network-wide paths, including the shortest paths, for each combination of ingress/source and egress/destination router. The inputs to the algorithms are the IGP cost metrics and the discovered graph data about the routers, sub-networks and interconnections.

The network operator can, for example, use the combined information, including the set of network-wide paths and their associated costs/metrics through the AS, in conjunction with the overlaid requested traffic management information (about the LSP) to monitor the logical non-default path deployment. This combined information provides a valuable aid to the network operator, for example in designing new paths, LSP provisioning, and ensuring that the network is performing to design specification.

For example, by comparing the network-wide paths, the default paths, the active logical paths and the routing objectives associated with the active paths it is possible to generate a set of alternative logical paths that would conform to the routing objectives associated with the active logical paths. Referring to Figure 1 (and assuming for simplicity in this example that the IGP path cost is analogous to the number of routers traversed and that all links have an equal maximum capacity), the application will calculate that the default path from the router 10 to the router 12 is via the router 18. An active MPLS LSP is discovered between the routers 10 and 18 that requires a reserved bandwidth equating to 75% utilisation of the link maximum capacity. This LSP has been installed at the request of the manager of AS3 who requires a guaranteed level of bandwidth for connection to AS2. A second path is also discovered between the routers 10 and 12 via the routers 14 and 16, that is being used for another purpose; this path requires 20% of the bandwidth on those links. The application determines that the first LSP is on the default path, and that the combined load of the first and second LSPs does not equate to more than the available maximum capacity. The application can therefore recommend that an alternative path for the first LSP would be via the router 14 and the router 16, rather than via the default path through the router 18.

Utilising a mechanism to inform the external application of any change to the LSP, for example caused by loss of an internal transit network owing to link failure, may help the operator to mitigate the impacts of such a failure by providing an immediate warning of the LSP change. One such mechanism that allows routers to provide feedback is the SNMP trap mechanism. An SNMP trap, once set, will inform an external application of a change in the target MIB data. The new LSP, or any changes to the characteristics of the LSP, can then be overlaid over the changed topology once again providing near-real time feedback of LSP behaviour.

The annotated topology provided by the probe 40 is therefore able to assist operators in various network management tasks including those described above. The described process could also be applied, but is not limited to, other forms of traffic management and other technologies that employ routing over separate logical paths via packet classification at ingress and egress routers, as alternatives to typical least-cost path routing, such as Differentiated Services, Virtual Private Networks (VPNs), Voice over IP, SLAs and QoS mechanisms.

## Claims

1. A method for identifying a network-wide set of paths potentially taken by packets in a communications network, comprising the steps of:
monitoring packets traversing at least one link in the network;
selecting packets containing information indicative of the interconnection of the network, and of its interconnection with other networks;
detecting the contents of the selected packets; and
using the detected contents to identify the network-wide set of routers and sub-networks and their interconnections, which are traversed by communications within the network.

2. The method of claim 1, including the step of using the detected contents to determine the functionality associated with the identified routers and sub-networks, and the cost metrics of the identified interconnections, which are traversed by communications within the network.

3. The method of claim 2, including the step of using the detected contents to determine a network-wide set of potential paths, both through the network and connecting the network with other networks, which are traversed by communications within the network.

4. The method of claim 3, including the step of using the detected contents to determine a set of default paths, as defined by the cost metrics, which are traversed by communications within the network.

5. The method of claim 3, including the steps of:
querying the routers based upon their predetermined functionality; and
using the results of the querying to determine if packet classification is occurring at network ingress routers and if any alternative logical paths to the default path are traversed by communications within the network.

6. The method of claim 3, including the step of using the detected contents to determine alternative logical paths that could be traversed by communications within the network.

7. The method of any two or all three of claims 4, 5 and 6, including the step of generating a comparison between the determined paths.

8. The method of claim 5, including the step of querying the routers for properties associated with the determined paths that are indicative of predetermined routing objectives for the paths.

9. The method of claim 7 and claim 8, including the step of using the comparison to determine alternative logical paths to those currently in use that would meet the predetermined routing objectives.

10. The method of claim 9, including the step of recommending an alternative set of logical paths that meets the predetermined objectives.

11. Apparatus for identifying a network-wide set of paths potentially taken by packets in a communications network, comprising:
a monitor for monitoring packets traversing at least one link in the network;
a selector for selecting packets containing information indicative of the interconnection of the network, and of its interconnection with other networks;
a detector for detecting the contents of the selected packets; and
an identifier for using the detected contents to identify the network-wide set of routers and sub-networks and their interconnections, which are traversed by communications within the network.

12. The apparatus of claim 11, wherein the identifier uses the detected contents to determine the functionality associated with the identified routers and sub-networks, and the cost metrics of the identified interconnections, which are traversed by communications within the network.

13. The apparatus of claim 12, wherein the identifier uses the detected contents to determine a network-wide set of potential paths, both through the network and connecting the network with other networks, which are traversed by communications within the network.

14. The apparatus of claim 13, wherein the identifier uses the detected contents to determine a set of default paths, as defined by the cost metrics, which are traversed by communications within the network.

15. The apparatus of claim 13, including a query generator for querying the routers based upon their predetermined functionality, wherein the identifier uses the results of the querying to determine if packet classification is occurring at network ingress routers and if any alternative logical paths to the default path are traversed by communications within the network.

16. The apparatus of claim 13, wherein the identifier uses the detected contents to determine alternative logical paths that could be traversed by communications within the network.

17. The apparatus of any two or all three of claims 14, 15 and 16, wherein the identifier generates a comparison between the determined paths.

18. The apparatus of claim 15, wherein the query generator queries the routers for properties associated with the determined paths that are indicative of predetermined routing objectives for with the paths.

19. The apparatus of claim 17 and claim 18, wherein the identifier uses the comparison to determine alternative logical paths to those currently in use that would meet the predetermined routing objectives.

20. The apparatus of claim 19, wherein the identifier recommends an alternative set of logical paths that meets the predetermined objectives.
